# EUROPEAN PATENT APPLICATION

(11) **EP 4 684 626 A1**
(43) Date of publication of application: **28.01.2026**
(21) Application number: 24814213.5
(22) Date of filing: 17.05.2024
(51) Int. Cl.: A01D 34/64

(54) **RIDING LAWN MOWER AND OUTDOOR OPERATION VEHICLE**

(30) Priority: 30.05.2023 CN 202321347737 U; 30.05.2023 CN 202321349782 U; 30.05.2023 CN 202310630502
(71) Applicant: Nanjing Chervon Industry Co., Ltd., Nanjing, Jiangsu 211106 (CN)
(72) Inventor: CHEN, Xu, Nanjing, Jiangsu 211106 (CN); LI, Li, Nanjing, Jiangsu 211106 (CN); WEI, Tianfang, Nanjing, Jiangsu 211106 (CN)
(74) Representative: Sun, Yiming
(86) International application number: PCT/CN2024/093990
(87) International publication number: WO 2024/245014

(57) **Abstract**

Provided is a manned mower. The manned mower includes a vehicle body on which a support portion for supporting a user is mounted; a traveling mechanism including traveling wheels for supporting the vehicle body and a traveling motor for driving the traveling wheels to rotate; a power supply device including at least one battery pack for supplying power to the traveling motor; a controller for controlling the operation of the traveling motor; and a sensing device configured to sense an obstacle in the traveling direction of the manned mower. The controller is configured to estimate information related to the obstacle based on the output of the sensing device and adjust the traveling speed or direction of the manned mower when the information satisfies a preset condition. Through the preceding technical solutions, the manned mower with an early warning function and an automatic obstacle avoidance function can be provided, thereby providing the user with more flexibility and ensuring driving safety.

## Description

This application claims priority to Chinese Patent Application No. 202321347737.1 filed with the China National Intellectual Property Administration (CNIPA) on May 30, 2023, Chinese Patent Application No. 202321349782.0 filed with the CNIPA on May 30, 2023, and Chinese Patent Application No. 202310630502.1 filed with the CNIPA on May 30, 2023, the disclosures of which are incorporated herein by reference in their entireties.

### TECHNICAL FIELD

The present application relates to the technical field of power tools and, in particular, to a manned mower and an outdoor work vehicle.

### BACKGROUND

As a garden tool, a manned mower in the related art is widely used in the field of trimming lawns and vegetation. The manned mower is more labor-saving and more efficient in mowing than a push mower.

This part provides background information related to the present application, and the background information is not necessarily the existing art.

### SUMMARY

An object of the present application is to solve or at least alleviate part or all of the preceding problems. Therefore, an object of the present application is to provide a manned mower and an outdoor work vehicle that first prompt the user to decelerate. If it is determined that the user does not decelerate within a preset condition, active braking or deceleration is performed, thereby providing the user with more flexibility and ensuring driving safety.

To achieve the preceding object, the present application adopts the technical solutions below. A manned mower includes a vehicle body on which a support portion for supporting a user is mounted; a traveling mechanism including traveling wheels for supporting the vehicle body and a traveling motor for driving the traveling wheels to rotate; a power supply device including at least one battery pack for supplying power to the traveling motor; a controller for controlling the operation of the traveling motor; and a sensing device configured to sense an obstacle in the traveling direction of the manned mower. The controller is configured to estimate information related to the obstacle based on the output of the sensing device and adjust the traveling speed or direction of the manned mower when the information satisfies a preset condition.

In some examples, an alert device is further included, where the controller is configured to trigger the alert device to activate an alert based on the information related to the obstacle.

In some examples, the information includes the distance between the manned mower and the obstacle. 4. The manned mower of claim 3, wherein the controller is configured to control the alert device to operate to remind the user or instruct the user to perform relevant operations when the distance is less than or equal to a first distance threshold.

In some examples, the controller is configured to control the manned mower to decelerate or change the traveling direction of the manned mower to avoid the obstacle when the distance is less than or equal to a second distance threshold.

In some examples, the first distance threshold is greater than or equal to 10 meters and less than or equal to 20 meters.

In some examples, the second distance threshold is greater than or equal to 5 meters and less than or equal to 15 meters.

In some examples, the controller is further configured to adjust the traveling speed or direction of the manned mower if no user operation is performed within a preset period after the alert device starts operating.

In some examples, the information includes the time it takes for the manned mower to collide with the obstacle.

In some examples, the controller is configured to control the alert device to operate to remind the user or instruct the user to perform relevant operations when the time is less than or equal to a first remaining preset time length.

In some examples, the controller is configured to control the manned mower to decelerate or change the traveling direction of the manned mower to avoid the obstacle when the time is less than or equal to a second remaining preset time length.

In some examples, the first preset time length is greater than or equal to 4s and less than or equal to 10s.

In some examples, the second preset time length is greater than or equal to 1s and less than or equal to 4s.

In some examples, the traveling direction includes a forward direction and a reverse direction.

In some examples, a mowing mechanism is further included, where the mowing mechanism includes a mowing blade and a mowing motor for driving the mowing blade to rotate, and the controller is further configured to control the rotational speed of the mowing motor based on the output of the sensing device.

An outdoor work vehicle includes a vehicle body on which a support portion for supporting a user is mounted; a traveling mechanism including traveling wheels for supporting the vehicle body and a traveling motor for driving the traveling wheels to rotate; a power supply device including at least one battery pack for supplying power to the traveling motor; a controller for controlling the operation of the traveling motor; a sensing device configured to sense an obstacle in the traveling direction of the outdoor work vehicle; and an alert device triggered by the controller to operate to remind the user or instruct the user to perform relevant operations. The controller is configured to estimate information related to the obstacle based on the output of the sensing device. The alert device is configured to start operating based on the information. The controller is further configured to adjust the traveling speed or direction of the outdoor work vehicle if no user operation is performed within a preset period after the alert device starts operating.

In some examples, the information includes the distance between the outdoor work vehicle and the obstacle or the time it takes for the outdoor work vehicle to collide with the obstacle.

In some examples, the traveling direction includes a forward direction and a reverse direction.

In some examples, the outdoor work vehicle includes at least one of a manned mower, an all-terrain vehicle, or a smart mower.

### BRIEF DESCRIPTION OF DRAWINGS

FIG. 1 is a schematic view of a manned mower according to the present application from one perspective.
FIG. 2 is a schematic view of a manned mower according to the present application from another perspective.
FIG. 3 is a schematic view illustrating the connection between a steering operating member and traveling wheels according to the present application.
FIG. 4 is a sectional view of a clutch according to the present application.
FIG. 5 is an exploded view of a clutch according to the present application.
FIG. 6 is a schematic view illustrating that a buffer assembly is connected between two connecting rods according to the present application.
FIG. 7 is an exploded view of a buffer assembly and two connecting rods according to the present application.
FIG. 8 is a flowchart of a control method for a manned mower according to the present application.
FIG. 9 is a flowchart of another control method for a manned mower according to the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

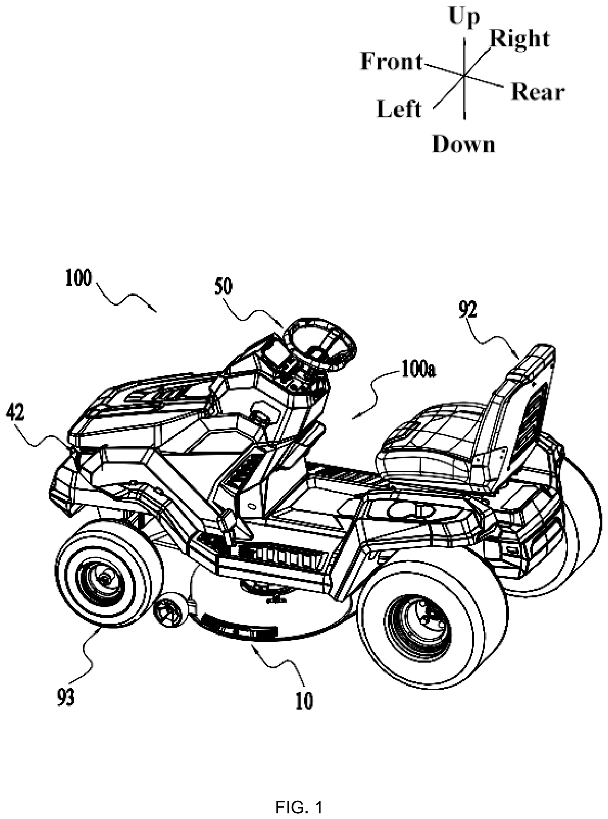

FIGS. 1 to 3 show specific examples of the present application. For example, if a mowing mechanism 10 is mounted on a vehicle body 100a, a manned mower 100 is provided. The vehicle body 100a may also be equipped with a snow shoveling assembly or other working attachments, thereby forming an outdoor tool such as a snow thrower, a string trimmer, electric shears, a hedge trimmer, a chainsaw, or a pole saw. In this case, strictly speaking, the manned mower 100 is no longer just a mowing device, but a manned vehicle that can perform different tasks according to different connected working attachments. The vehicle body 100a is provided with at least one attachment interface, such as a hook, threads, a hole, or a groove. Different working attachments may be connected to the same attachment interface or may be connected to different attachment interfaces, respectively. Apparently, the following examples are part, not all, of the examples of the present application.

FIG. 1 shows the manned mower 100 as a specific example of the present application. The manned mower 100 may be used for a user to sit or stand on and operate to trim lawns and vegetation. In this specification, front, rear, left, right, up, and down are defined as the directions shown in FIG. 1. Specifically, when the user is carried on the manned mower 100 located on the ground, a direction that the user faces is defined as the front, a direction on the back of the user is defined as the rear, a direction on a left-hand side of the user is defined as the left, a direction on a right-hand side of the user is defined as the right, a direction towards the ground is defined as down, and a direction away from the ground is defined as up.

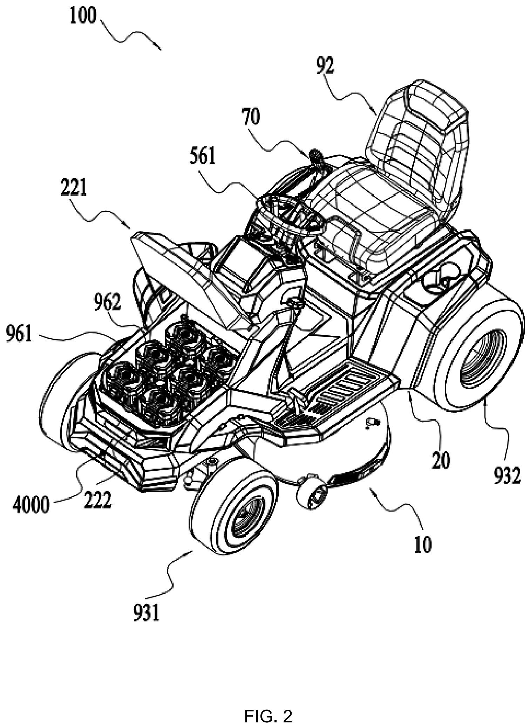

As shown in FIGS. 1 and 2, the manned mower 100 includes the vehicle body 100a, a traveling mechanism 93, and a power supply device 96. The traveling mechanism 93 includes traveling wheels 931 for supporting the vehicle body 100a and a traveling motor for driving the traveling wheels 931 to rotate. The power supply device 96 is used for supplying power to at least the traveling motor. The manned mower 100 may further include an illumination mechanism, a controller, an operating assembly 50, and the like. The power supply device 96 can supply electrical energy to the components so that the manned mower 100 can be used as a power tool. Compared with a fuel-based mower, the electric manned mower 100 is more energy-efficient and environmentally friendly, has a simpler structure, and is lower in cost. A support portion for supporting the user is mounted on the vehicle body 100a, the user can sit or stand on the support portion, and the support portion may be a seat 92.

The operating assembly 50 includes a control panel, a steering wheel assembly, and a pedal assembly. The pedal assembly includes an accelerator pedal and a brake pedal for controlling the forward speed or reverse speed. The control panel includes a display screen and multiple operating members. The user can see the display state on the display screen while operating the operating members. The operating members may include switches, buttons, gears, and the like, which are used for controlling the traveling mechanism 93, a cutting mechanism 10, and the like. The steering wheel assembly includes a steering operating member 561 for the user to operate to control the steering of the traveling wheels 931.

The illumination mechanism includes a front illumination assembly 42, a left illumination assembly, and a right illumination assembly, which are disposed on the front side and the left and right sides of the vehicle body 100a, respectively. The on and off and brightness of the front illumination assembly 42, the left illumination assembly, and the right illumination assembly can be manually controlled through the operating members. For the specific control method, reference is made to the existing art, and no limitation is made here.

The power supply device 96 includes a battery compartment housing 961 and battery packs 962 disposed in the battery compartment housing 961. In some examples, one or more battery compartment housings 961 may be provided, one or more battery packs 962 may be provided, multiple battery packs 962 may be mounted in multiple battery compartment housings 961, respectively, or multiple battery packs 962 may be mounted in the same battery compartment housing 961. Compared to a fuel engine and a fuel tank, even multiple battery packs 962 are provided, the weight is lighter. The power supply device 96 is disposed in the front of the vehicle body 100a, thereby adjusting the center of gravity of the vehicle body 100a, reducing the steering force required when the front traveling wheels 931 steer, and making it easier for the user to operate. In addition, the positive pressure applied by the rear traveling wheels 931 to the ground is relatively large, thereby increasing the grip force and making climbing easier.

The vehicle body 100a is provided with a housing system 20, and the housing system 20 includes a left cover and a right cover. The left illumination assembly and the right illumination assembly are mounted on the left cover and the right cover, respectively. The housing system 20 further includes a front cover, and the battery packs 962 are covered by the front cover 22. The front cover 22 includes an upper cover 221 and an enclosure 222 and is mounted on the vehicle body 100a. The enclosure 222 is fixedly connected to the battery compartment housing 961, and the upper cover 221 has an open state and a closed state. When the upper cover is opened, the battery packs 962 can be removed and mounted. The operating member can control the upper cover 221 to be opened or closed.

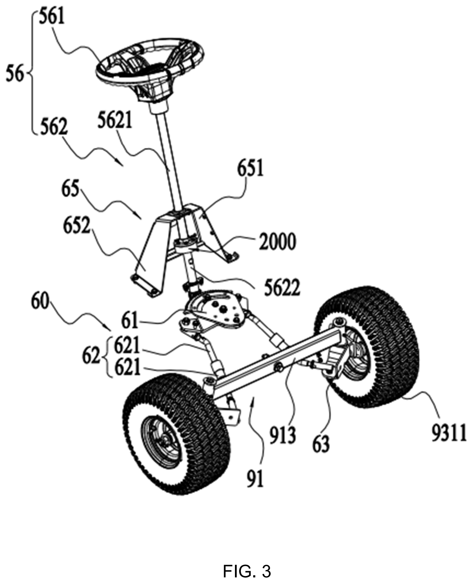

As shown in FIG. 3, the manned mower 100 further includes a steering assembly 60 and steering knuckles 63. The steering assembly 60 includes a steering disc 61 and pull rods 62 connected to the steering disc 61. The steering wheel assembly 56 further includes a support rod 562. An end of the support rod 562 is drivingly connected to the steering operating member 561, and the other end of the support rod 562 is drivingly connected to the steering disc 61. The vehicle body 100a further includes a first cross beam 913, the steering knuckle 63 connects the pull rod 62 to a traveling wheel 9311, and the steering knuckle 63 is rotatably connected to the first cross beam 913. The support rod 562 and the steering assembly 60 are located on the power transmission path between the steering operating member 561 and traveling wheels 9311. The steering operating member 561 is operated by the user to control the traveling direction of the manned mower 100. The support rod 562 transmits the torque generated when the user rotates the steering operating member 561 to the steering assembly 60, thereby controlling the traveling wheels 9311 to change the direction.

The steering operating member 561 is provided with a ring gear, a first gear and a second gear are disposed at two ends of the support rod 562, and the first gear meshes with the ring gear. When the user rotates the steering operating member 561, the ring gear drives the first gear and the support rod 562 to rotate synchronously.

The steering disc 61 is a fan-shaped gear disc, which is connected to the pull rods 62 by welding or a detachable connection. The fan-shaped gear disc meshes with the second gear. When the support rod 562 rotates, the fan-shaped gear disc drives the second gear and the pull rods 62 to rotate synchronously, thereby driving the traveling wheels to rotate to achieve steering.

The vehicle body 100a further includes a support plate and a support frame 65. The steering disc 61 is rotatably connected to the support plate. The support frame 65 includes a transverse plate and two support feet 651 connected to two ends of the transverse plate. The two support feet 651 are connected to the support plate so that the transverse plate and the support plate are relatively fixed. The support rod 562 is rotatably connected to the transverse plate. In this manner, connection reliability can be ensured.

The traveling mechanism 93 includes a first traveling assembly 931 and a second traveling assembly 932 that are arranged in the front and rear direction. The first traveling assembly 931 includes two traveling wheels 9311. Correspondingly, the steering assembly 60 includes two pull rods 62, an end of each of the two pull rods 62 is connected to a respective one of the left and right sides of the fan-shaped gear disc, and the other end of each of the two pull rods 62 is connected to a respective one of the two traveling wheels 9311 of the first traveling assembly 931. The steering assembly 60 drives the first traveling assembly 931 to steer. The steering assembly 60 can cause the left traveling wheel 9311 and the right traveling wheel 9311 of the first traveling assembly 931 to steer.

The manned mower 100 further includes a clutch 2000 disposed on the power transmission path between the steering operating member 561 and the traveling wheels 9311. When the force applied to the clutch 2000 satisfies a preset condition, the clutch 2000 can automatically switch to a decoupling state to disconnect the power transmission between the steering operating member 561 and the traveling wheels 9311. By providing the clutch 2000, during normal operation, the clutch 2000 is in a coupling state, the clutch 2000 is disposed on the power transmission path between the steering operating member 561 and the traveling wheels 9311, and the user controls the steering of the traveling wheels 9311 by operating the steering operating member 561. When the vehicle body 100a is impacted and drives the traveling wheels 9311 to rotate, or when the traveling wheels 9311 rotate due to the impact between the traveling wheels 9311, the traveling wheels 9311 transmit the force or torque to the clutch 2000 through the power transmission path. When the force applied to the clutch 2000 satisfies the preset condition, the clutch 2000 switches to the decoupling state to disconnect the traveling wheels 9311 from the steering operating member 561 so that the force is not transmitted to the steering operating member 561, thereby solving the following problem: the steering operating member 561 rotates along with the traveling wheels 9311 and causes injury to the user holding the steering operating member 561.

In an example, as shown in FIGS. 3 to 5, the clutch 2000 includes a first friction disc 2001, a housing 2002, a second friction disc 2003, and a locking member 2004. The first friction disc 2001 is connected to the housing 2002, and an accommodation cavity is formed between the first friction disc 2001 and the housing 2002. The second friction disc 2003 includes a disc portion 20031 and a shaft portion 20032. The shaft portion 20032 penetrates the first friction disc 2001. The locking member 2004 is disposed outside the accommodation cavity and is threadedly connected to the shaft portion 20032, and the locking member 2004 can abut against the first friction disc 2001 so that the first friction disc 2001 can abut against the second friction disc 2003. The shaft portion 20032 is (indirectly) connected to the steering operating member 561, and the housing 2002 is (indirectly) connected to the traveling wheels 9311.

During normal traveling, the locking member 2004 is in a locking state, the first friction disc 2001 abuts against the second friction disc 2003, and the force from the steering operating member 561 is transmitted in the following sequence: the shaft portion 20032, the disc portion 20031, the first friction disc 2001, the housing 2002, and the traveling wheels 9311. When the traveling wheels 9311 collide with an obstacle, the torque transmission sequence is as follows: the housing 2002, the first friction disc 2001, and the locking member 2004. When the torque is large enough, for example, when the preset condition that the torque transmitted to the locking member 2004 exceeds 500 N·m is satisfied, the locking member 2004 and the shaft portion 20032 that are threadedly connected are loosened and unlocked after being subjected to torque so that the disc portion 20031 is separated from the first friction disc 2001, that is, the clutch 2000 switches to the decoupling state, thereby disconnecting the traveling wheels 9311 from the steering operating member 561. **In** another example, the structure of the clutch 2000 remains unchanged, the shaft portion 20032 is connected to the traveling wheels 9311, and the housing 2002 is connected to the steering operating member 561 so that coupling and decoupling can also be achieved. The specific process is not repeated here. The inner space of the accommodation cavity is large enough so that it can be ensured that a gap can be formed between the second friction disc 2003 and the first friction disc 2001, and the second friction disc 2003 does not abut against the housing 2002, thereby preventing the second friction disc 2003 from rotating with the housing 2002.

By adopting the preceding mechanical structure of the clutch 2000, after the collision with an obstacle, the external force is transmitted through the traveling wheels 9311, causing the clutch 2000 to be passively decoupled, that is, the clutch 2000 is automatically controlled by the force, thereby simplifying the control.

When the traveling wheels 9311 connected to the steering assembly 60 collide with an obstacle, the traveling wheels 9311 may steer due to the impact force, causing the manned mower 100 to not move in a preset direction. Therefore, the clutch 2000 is provided to prevent the traveling wheels 9311 from steering and continuing moving after being collided, thereby avoiding an uncontrolled traveling direction and improving driving reliability. The locking member 2004 may be a locking nut, the shaft portion 20032 is a screw with external threads, and the locking nut threadedly mates with the external threads to simplify the structure. When the traveling wheels 9311 are collided mainly from the left and right sides, the threaded connection structure between the shaft portion 20032 and the locking member 2004 can be loosened after being subjected to torque, thereby preventing the traveling wheels 9311 from steering.

The assembly process of the clutch 2000 includes the following: the shaft portion 20032 passes through the first friction disc 2001, and the first friction disc 2001 and the housing 2002 are connected so that the disc portion 20031 is located in the accommodation cavity formed by the first friction disc 2001 and the housing 2002; and then the locking member 2004 is threadedly connected to the shaft portion 20032 and abuts against the first friction disc 2001, thereby ensuring that the locking member 2004 is locked and the first friction disc 2001 abuts against the disc portion 20031 of the second friction disc 2003. The first friction disc 2001 and the housing 2002 may be connected via fasteners 2005 such as bolts. For example, the first friction disc 2001 is a flange disc, and the housing 2002 is provided with multiple threaded holes. The first friction disc 2001 may be in a plate shape to facilitate connection with the housing 2002. The first friction disc 2001 may further be provided with a groove, and the groove and the housing 2002 together form an accommodation space.

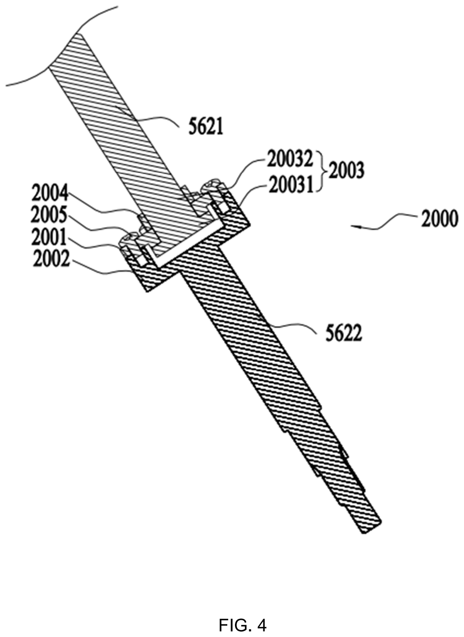

As shown in FIG. 4, a boss is disposed on a side of the second friction disc 2003 facing the housing 2002, the end surface of the boss can abut against the end surface of the first friction disc 2001, and a gap is provided between the circumferential surface of the second friction disc 2003 and the inner wall of the accommodation cavity so that in the decoupling state, the second friction disc 2003 is prevented from contacting the interior and rotating therewith, thereby improving the reliability of the clutch 2000. The first friction disc 2001 is provided with a through hole, and the shaft portion 20032 passes through the through hole. The first friction disc 2001 has a clearance fit with the shaft portion 20032, or the first friction disc 2001 is rotatably connected to the shaft portion 20032, thereby preventing the shaft portion 20032 from rotating with the first friction disc 2001 in the decoupling state.

As shown in FIGS. 3 to 5, the support rod 562 includes a first connecting shaft 5621 and a second connecting shaft 5622, the clutch 2000 is connected between the first connecting shaft 5621 and the second connecting shaft 5622, one of the first connecting shaft 5621 and the second connecting shaft 5622 is drivingly connected to the steering operating member 561, the other one of the first connecting shaft 5621 and the second connecting shaft 5622 is drivingly connected to the steering disc 61, and the pull rods 62 connect the steering disc 61 to the traveling wheels 9311. The user operates the steering operating member 561, and the torque is transmitted to the traveling wheels 9311 through the first connecting shaft 5621, the clutch 2000, the second connecting shaft 5622, the steering disc 61, and the pull rods 62.

As shown in FIGS. 3 to 5, in an example, when the clutch 2000 is connected between the first connecting shaft 5621 and the second connecting shaft 5622, the shaft portion 20032 is connected to the first connecting shaft 5621, the housing 2002 is connected to the second connecting shaft 5622, the first connecting shaft 5621 is connected to the steering operating member 561, and the second connecting shaft 5622 is connected to the traveling wheels 9311. When the traveling wheels 9311 collide with an obstacle, the torque transmission sequence is as follows: the traveling wheels 9311, the steering assembly 60, the second connecting shaft 5622, and the housing 2002 of the clutch 2000, so that the clutch 2000 is decoupled. In other examples, the first connecting shaft 5621 is connected to the traveling wheels 9311, the second connecting shaft 5622 is connected to the steering operating member 561, and the torque transmission sequence is as follows: the traveling wheels 9311, the steering assembly 60, the first connecting shaft 5621, and the housing 2002 of the clutch 2000, so that the clutch 2000 is decoupled.

As shown in FIG. 4, in an example, the second friction disc 2003 and the first connecting shaft 5621 form an integral structure, and the housing 2002 and the second connecting shaft 5622 form an integral structure, thereby simplifying the structure. For example, the second friction disc 2003 and the first connecting shaft 5621 form an integral structure by welding the shaft portion 20032, the disc portion 20031, and the first connecting shaft 5621 together. Similarly, the housing 2002 and the second connecting shaft 5622 may also be integrally formed or welded. In other examples, the second friction disc 2003 and the first connecting shaft 5621 may also be connected via the fasteners 2005 or the like. Similarly, the housing 2002 and the second connecting shaft 5622 may also be connected via the fasteners 2005.

In other examples, the clutch 2000 may be the existing friction clutch 2000, which has a simple structure and can smoothly engage at any rotational speed with small impact vibration, and the friction surfaces slip when overloaded, thereby protecting other important parts from damage. The clutch 2000 may also be a common type such as the electromagnetic clutch 2000, which is not limited.

In other examples, the clutch 2000 may also be mounted at a position, for example, between the support rod 562 and the steering assembly 60, between the steering disc 61 and the pull rods 62, or between the pull rods 62 and the steering knuckles 63, as long as the clutch 2000 is on the power transmission path between the traveling wheels 9311 and the steering operating member 561, and the specific position is not limited. Of course, as the mounting position changes, the condition for force decoupling also changes accordingly, and settings are performed according to requirements.

As shown in FIGS. 3, 6, and 7, the manned mower 100 further includes buffer assemblies 3000 disposed on the power transmission path between the steering operating member 561 and the traveling wheels 9311 and used for absorbing at least part of the force transmitted from the traveling wheels 9311 to the steering operating member 561 on the power transmission path. By providing the buffer assemblies 3000, during normal operation, the buffer assemblies 3000 are in an initial state, the buffer assemblies 3000 are disposed on the power transmission path between the steering operating member 561 and the traveling wheels 9311, and the user controls the steering of the traveling wheels 9311 by operating the steering operating member 561. When the vehicle body 100a is impacted and drives the traveling wheels 9311 to rotate, or when the traveling wheels 9311 rotate due to the impact between the traveling wheels 9311, the traveling wheels 9311 transmit the force or torque to the buffer assemblies 3000 through the power transmission path. When the force applied to the buffer assembly 3000 satisfies a preset condition, part or all of the force is absorbed to weaken the impact force transmitted to the steering operating member 561, thereby solving the following problem: when the vehicle body 100a is impacted, related structures are damaged by the impact force, and accidental injury is caused to the user.

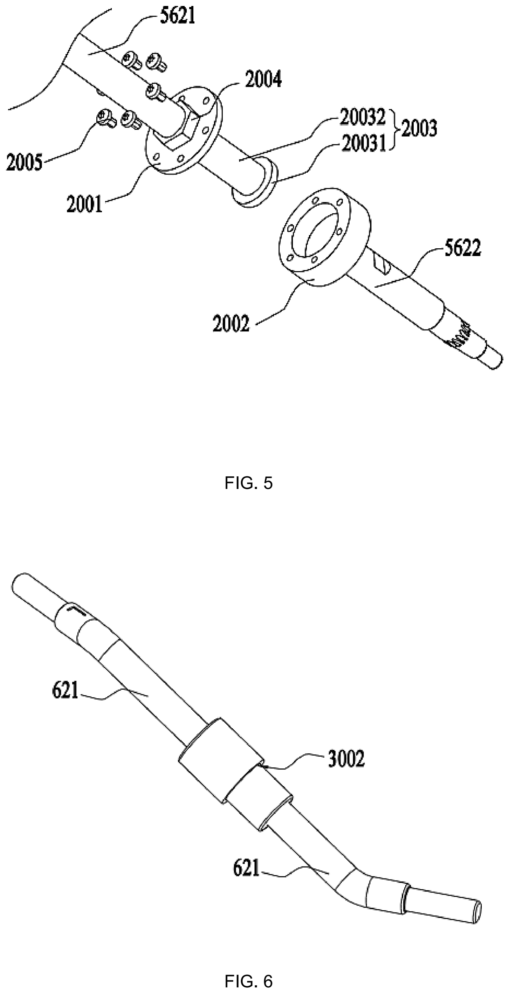

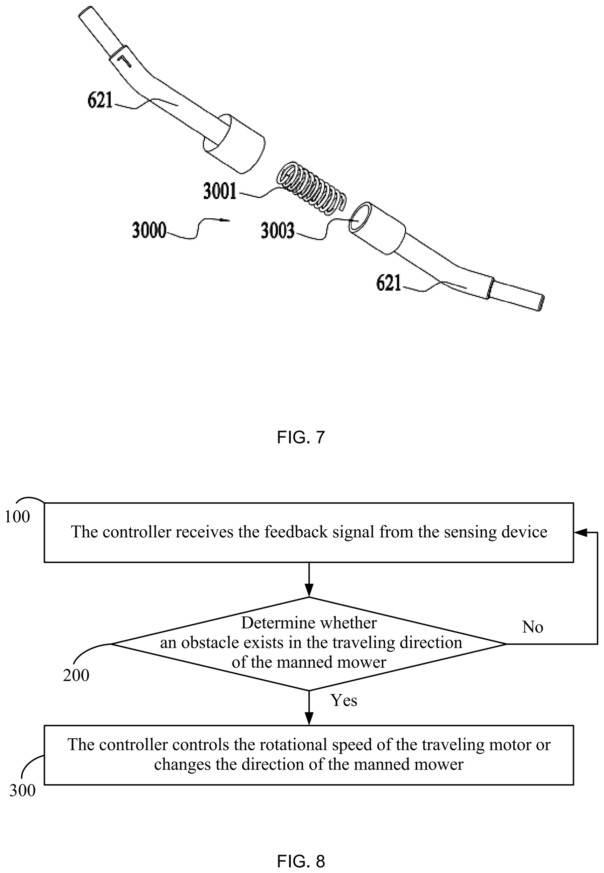

As shown in FIGS. 6 and 7, the pull rod 62 includes two connecting rods 621, one connecting rod 621 is connected to the steering disc 61, the other connecting rod 621 is connected to the traveling wheel 9311 through the steering knuckle 63, and the buffer assembly 3000 is connected between the two connecting rods 621. When the vehicle body 100a is impacted, the force is transmitted to the buffer assembly 3000 through the traveling wheel 9311, the steering knuckle 63, and one connecting rod 621 in sequence, and the buffer assembly 3000 absorbs the force, thereby preventing the force from continuing being transmitted to the steering wheel assembly 56 through the other connecting rod 621.

In an example, the buffer assembly 3000 includes an elastic member 3001 connected between the two connecting rods 621. When the force acts on the elastic member 3001, the elastic member 3001 deforms to absorb the force. When the force disappears, the elastic member 3001 is reset. The elastic member 3001 with the preceding mechanical structure is provided in the buffer assembly 3000 so that after the collision with an obstacle, the elastic member 3001 is passively deformed due to the transmission of force, thereby weakening the impact force and simplifying the control. In other examples, the buffer assembly 3000 may also be a friction buffer, a rubber buffer, a friction rubber buffer, a viscoelastic rubber mud buffer, a hydraulic buffer, an air buffer, or the like. However, compared with the elastic member 3001, the preceding structures are more complicated, resulting in inconvenience in installation and usage and high cost.

The first connecting rod 621 is provided with a sliding groove 3002 along the extension direction, the second connecting rod 621 penetrates the sliding groove 3002 and is slidably connected to the sliding groove 3002, the elastic member 3001 is connected between the second connecting rod 621 and the sliding groove 3002, and the second connecting rod 621 slides along the sliding groove 3002 to achieve the sliding connection between the two connecting rods 621, thereby improving the connection accuracy.

The buffer assembly 3000 is disposed between the two connecting rods 621, and the two connecting rods 621 are slidably connected. The force absorbed by the buffer assembly 3000 is mainly the force along the sliding direction of the two connecting rods 621. The two connecting rods 621 are arranged along the front and rear direction, or the two connecting rods 621 are arranged along the up and down direction. If the two connecting rods 621 are arranged along the front and rear direction, the buffer assembly 3000 mainly absorbs the force acting on the traveling wheel 9311 along the front and rear direction of the vehicle body 100a. If the two connecting rods 621 are arranged along the up and down direction, the lower end of the support rod 562 can be supported, thereby allowing the support rod 562 and the steering operating member 561 to move up and down.

In other examples, the buffer assembly 3000 may also be mounted at a position, for example, between the support rod 562 and the steering assembly 60, between the steering disc 61 and the pull rod 62, or between the pull rod 62 and the steering knuckle 63, as long as the buffer assembly 3000 is on the power transmission path between the traveling wheels 9311 and the steering operating member 561, and the specific position is not limited. Of course, as the mounting position changes, the direction and magnitude of the force that can be absorbed also change accordingly.

The elastic member 3001 expands and contracts along a first direction, an included angle is formed between the first direction and the horizontal direction, and the range of the included angle is 0 to 45°. For example, the elastic member 3001 is a spring, and the spring expands and contracts along the first direction. Generally, the traveling wheel 9311 is subjected to a horizontal force. The smaller the included angle between the telescopic direction of the spring and the horizontal direction is, the better the spring can absorb the force, and the smaller the allowable vertical movement range of the support rod 562 and the steering operating member 561 is. The larger the included angle is, the smaller the absorbed force is, and the larger the allowable vertical movement range of the support rod 562 and the steering operating member 561 is. Specifically, the included angle between the telescopic direction of the elastic member 3001 and the horizontal direction is set according to the structure of the steering assembly 60. As shown in FIGS. 6 and 7, the two connecting rods 621 each have a folded angle so that an included angle is formed between the telescopic direction of the elastic member 3001 and the horizontal direction.

The elastic member 3001 is a spring, which expands and contracts to absorb the force. In an example, a limiting groove 3003 is provided at the end of the second connecting rod 621 along the extension direction, and the spring penetrates the limiting groove 3003 and is connected to the limiting groove 3003 to ensure that the spring deforms along the extension direction of the limiting groove 3003. In another example, the sliding groove 3002 and the limiting groove 3003 are each provided with a limiting shaft, and two ends of the spring are sleeved on the two limiting shafts, respectively and abut against the bottom of the sliding groove 3002 and the bottom of the limiting groove 3003, respectively, thereby ensuring that the spring deforms along the extension direction of the limiting shafts.

A limiting structure (not shown in the figure) is provided between the notch of the sliding groove 3002 and the second connecting rod 621 so that the second connecting rod 621 can slide between the bottom and notch of the sliding groove 3002, and the two connecting rods 621 can be prevented from slipping apart from each other. The limiting structure includes a retaining edge at the notch and a flange at the end of the second connecting rod 621. The flange can be limited by the retaining edge to prevent slipping apart.

When the impact force at the impact point of the traveling wheel 9311 exceeds 5000 N, the buffer assembly 3000 is used for absorbing at least part of the force transmitted from the traveling wheel 9311 to the steering operating member 561 on the power transmission path. When the impact force is less than 5000 N, the buffer assembly 3000 is used for transmitting the impact force without absorbing the impact force. The limit value of the specific impact force is determined based on experiments or simulation calculations. For example, when the impact force is less than 5000 N, the impact force has no impact or little impact on the connecting rods 621, the steering disc 61, and the steering wheel assembly 56. When the impact force is greater than 5000 N, the impact force has an impact on the connecting rods 621, the steering disc 61, and the steering wheel assembly 56. In this case, 5000 N may be determined as the limit value, and the buffer assembly 3000 is determined according to the limit value. For example, when the buffer assembly 3000 is a spring, the spring type is determined according to the limit value of the force.

In an example, the ATV includes the vehicle body 100a, the traveling mechanism 93, the power supply device 96, and the steering operating member 561. The traveling mechanism 93 includes traveling wheels 9311 for supporting the vehicle body 100a and a traveling motor for driving the traveling wheels 9311 to rotate. The power supply device 96 is disposed on the vehicle body 100a. The power supply device 96 is used for supplying electrical energy and supplying power to at least the traveling motor. The steering operating member 561 is operated by the user to control the steering of the traveling wheels 9311. The vehicle body 100a is equipped with the seat 92 for the user to sit on.

The ATV further includes the clutch 2000 disposed on the power transmission path between the steering operating member 561 and the traveling wheels 9311. When the force applied to the clutch 2000 satisfies a preset condition, the clutch 2000 can automatically switch to the decoupling state to disconnect the power transmission between the steering operating member 561 and the traveling wheels 9311. When the vehicle body 100a of the ATV is impacted and drives the traveling wheels 9311 to rotate, or when the traveling wheels 9311 rotate due to the impact between the traveling wheels 9311, the traveling wheels 9311 transmit the force or torque to the clutch 2000 through the power transmission path. When the force applied to the clutch 2000 satisfies the preset condition, the clutch 2000 switches to the decoupling state to disconnect the traveling wheels 9311 from the steering operating member 561, thereby solving the following problem: the steering operating member 561 rotates along with the traveling wheels 9311 and causes injury to the user holding the steering wheel. For the specific structure, mounting manner, and working principle of the clutch 2000, reference is made to the structure of the manned mower 100 described above, and the details are not repeated here.

The ATV further includes buffer assemblies 3000 disposed on the power transmission path between the steering operating member 561 and the traveling wheels 9311 and used for absorbing at least part of the force transmitted from the traveling wheels 9311 to the steering operating member 561 on the power transmission path. When the vehicle body 100a is impacted and drives the traveling wheels 9311 to rotate, or when the traveling wheels 9311 rotate due to the impact between the traveling wheels 9311, the traveling wheels 9311 transmit the force or torque to the buffer assemblies 3000 through the power transmission path. When the force applied to the buffer assembly 3000 satisfies a preset condition, part or all of the force is absorbed, thereby solving the following problem: when the vehicle body 100a is impacted, related structures are damaged by the impact force, and accidental injury is caused to the user. For the specific structure, mounting manner, and working principle of the buffer assembly 3000, reference is made to the structure of the manned mower 100 described above, and the details are not repeated here.

As shown in FIG. 2, the manned mower 100 further includes a sensing device 4000 and a controller. The sensing device 4000 is configured to sense obstacles in the traveling direction of the manned mower 100. The controller is electrically and communicatively connected to the sensing device 4000 and is configured to estimate information related to the obstacle based on the output of the sensing device 4000 and when the information satisfies a preset condition, adjust the traveling speed or direction of the manned mower 100. In some examples, the controller is configured to control the rotational speed of the traveling motor or change the direction of the manned mower 100 based on the feedback signal from the sensing device 4000. In this manner, by providing the sensing device 4000, when an obstacle is sensed in the traveling direction, the sensing device 4000 feeds back a signal to the controller, and the controller controls the traveling motor according to the feedback signal. The control manner may be determined according to actual conditions. If the obstacle is stationary and the manned mower 100 is in a traveling state, the controller controls the manned mower 100 to decelerate and stop before the manned mower 100 collides with the obstacle, thereby avoiding a collision. In some examples, the controller controls the manned mower 100 to steer before the manned mower 100 collides with an obstacle, thereby avoiding a collision. If the obstacle is in the traveling state, the controller controls the manned mower 100 to steer, thereby avoiding a collision and achieving automatic obstacle avoidance. In this manner, the problem of a collision accident due to a failure of the user to operate in time to avoid the obstacle is solved. It is to be noted that the preceding sensing device 4000 may be mounted at the front end of the vehicle or the rear end of the vehicle, or the front and rear ends of the vehicle are each provided with the sensing device 4000. One or more sensing devices 4000 may be provided. The specific mounting position of the sensing device may be adjusted by those skilled in the art according to actual conditions. The preceding obstacle in the traveling direction may be understood as the obstacle within a preset region range in the traveling direction, and the preset region range is set by the manufacturer or user of the vehicle. Of course, the preset region range also depends on the type and mounting position of the sensing device 4000.

In an example, when the steering wheel assembly 56 is a mechanical steering wheel, the controller cannot change the direction of the manned mower 100 and can only control the manned mower 100 to decelerate. In another example, when the steering wheel assembly 56 is an electronic steering wheel, the controller can change the direction of the manned mower 100 and can decelerate the manned mower 100 according to requirements.

The sensing device 4000 may be an infrared sensor that can sense the obstacle or a ranging sensor that can sense the distance from the obstacle.

In an example, the traveling direction includes a forward direction and a reverse direction, which is mainly used for obstacle avoidance when it is determined that obstacles appear in the front and rear direction. Accordingly, the sensing device 4000 may be mounted at the frontmost end of the manned mower 100 to sense obstacles in a timely manner; or the sensing device 4000 may be mounted at the topmost end of the manned mower 100 to sense obstacles from all directions while preventing the sensing device 4000 from being damaged due to a collision.

In other examples, the sensing devices 4000 may be disposed on the left and right sides of the manned mower 100 and used for obstacle avoidance when the obstacles appear in the left and right direction. For example, when the manned mower 100 is stationary and obstacles move toward the manned mower 100 from the left and right sides, obstacle avoidance is required.

In some examples, the manned mower 100 further includes an alert device. The controller is electrically or communicatively connected to the alert device. The controller is configured to trigger the alert device to activate an alert based on the information related to the obstacle. In some examples, the controller is configured to control the alert device to activate an alert based on the feedback signal from the sensing device 4000. The alert device may be a buzzer that sounds, a three-color flashing light, or another structure to remind the user to pay attention to obstacles ahead and take timely measures to prevent collisions. When the sensing device 4000 senses an obstacle, the alert device reminds the user or instructs the user to perform relevant operations, for example, instructing the user to perform a deceleration operation or a steering operation on the manned mower 100. That is, before the controller automatically controls the manned mower 100 to decelerate or steer through a preset program, the controller first prompts the user to actively perform an operation, leaving the user with active control rights, so that the user can perform a steering operation or a deceleration operation according to actual requirements, thereby ensuring more flexible usage.

In some examples, the information related to the obstacle includes the distance between the manned mower and the obstacle. In some examples, the controller is configured to control the alert device to operate to remind the user or instruct the user to perform relevant operations when the distance is less than or equal to a first distance threshold. In some examples, the controller is configured to control the manned mower to decelerate or change the traveling direction of the manned mower to avoid the obstacle when the distance is less than or equal to a second distance threshold.

When the sensing device 4000 senses an obstacle, the alert device immediately sounds an alert to alert the user, leaving the user enough time to make judgments and take actions. For example, the sensing device 4000 is an infrared sensor, and the sensing distance is pre-adjusted according to user requirements. When the obstacle is within a preset distance, the sensing device 4000 can sense the obstacle. The sensing distance has a range of 5 to 20 meters, for example, 5 meters, 10 meters, 15 meters, or 20 meters.

When the distance between the manned mower 100 and the obstacle reaches the first distance threshold, the alert device prompts the user to perform an operation to decelerate or steer the manned mower 100. When the distance is greater than the first distance threshold, the manned mower 100 is in a safe state. When the distance is less than the first distance threshold, there is a risk of collision, and the user needs to control the manned mower 100 in a timely manner. For example, the sensing device 4000 is a ranging sensor that feeds back the distance information between the ranging sensor and the obstacle to the controller. The first distance threshold is preset on the controller according to user requirements. The controller determines the relationship between the distance information and the first distance threshold. When the distance is equal to the first distance threshold, the controller controls the alert device to activate an alert to alert the user.

The controller detects that the manned mower 100 does not decelerate or steer, that is, the user does not perform relevant operations in response to the prompt of the alert device, or the requirements are not satisfied after the user performs the operation. The sensing device 4000 still feeds back the distance information of the obstacle. The second distance threshold is preset on the controller, and the second distance threshold is less than the first distance threshold. When the controller determines that the distance between the manned mower 100 and the obstacle reaches the second distance threshold, the controller automatically controls the rotational speed of the traveling motor or changes the direction of the manned mower 100 according to a preset program.

The controller presets the first distance threshold and the second distance threshold and determines the distance from the obstacle twice. After the first determination, the user can actively control the manned mower 100, thereby ensuring the autonomy and flexibility of the user's operation. After the second determination, the controller automatically controls the manned mower 100 to avoid the obstacle, thereby ensuring the safety and reliability of vehicle operation. The first distance threshold and the second distance threshold are set according to experiments, simulation calculations, and the conditions of the device to ensure that after the distance reaches the second distance threshold, the braking control performed by the controller is sufficient to achieve obstacle avoidance.

The first distance threshold is 10 to 20 meters, for example, 10 meters, 15 meters, or 20 meters; and the second distance threshold is 5 to 15 meters, for example, 5 meters, 10 meters, or 15 meters. The preceding distances may be combined arbitrarily, as long as it is ensured that the first distance threshold is greater than the second distance threshold. For example, the first distance threshold is 15 meters, and the second distance threshold is 5 meters.

In some examples, the controller is further configured to adjust the traveling speed or direction of the manned mower if no user operation is performed within a preset period after the alert device starts operating.

In some examples, the information related to the obstacle includes the time it takes for the manned mower to collide with the obstacle. The controller is configured to control the alert device to operate to remind the user or instruct the user to perform relevant operations when the time is less than or equal to a first remaining preset time length. The controller is configured to control the manned mower to decelerate or change the traveling direction of the manned mower to avoid the obstacle when the time is less than or equal to a second remaining preset time length.

When the time is less than or equal to the first remaining preset time length and the manned mower 100 collides with an obstacle, the alert device prompts the user to perform an operation to decelerate or steer the manned mower 100. The distance between the manned mower 100 and the obstacle and the current operating speed of the device are comprehensively considered to calculate the time it takes for the manned mower 100 to collide with the obstacle, that is, the first preset time. When the time is greater than the first preset time length, the manned mower 100 is in the safe state. When the time is less than the first preset time, there is a risk of collision, and the user needs to control the manned mower 100 in a timely manner. For example, the sensing device 4000 is a ranging sensor that feeds back the distance information between the ranging sensor and the obstacle to the controller. At the same time, the controller acquires the current operating speed of the device and calculates the time it takes for the device to collide with the obstacle. The controller determines the magnitude relationship between the time it takes for the manned mower to collide with the obstacle and the first preset time length. When the time is equal to the first preset time length, the controller controls the alert device to activate an alert. The specific method for acquiring the current operating speed is the existing art, and the details are not repeated here. Compared with the second example in which collision determination is performed solely based on the remaining distance, comprehensive consideration of the current operating speed of the device can more accurately determine the condition for a collision with the obstacle, but the calculation method is more complicated.

When it is detected that the manned mower 100 does not decelerate or steer or that the deceleration or steering of the manned mower 100 is insufficient to avoid a collision with the obstacle, the remaining time for a collision is calculated based on the current operating speed and the remaining distance, the second preset time length is preset on the controller, and the second preset time length is less than the first preset time length. When the remaining time is equal to the second preset time length, the controller automatically controls the rotational speed of the traveling motor or changes the direction of the manned mower 100 according to a preset program.

The controller presets the first preset time length and the second preset time length and determines the time for a collision with the obstacle twice. After the first determination, the user can actively control the manned mower 100, thereby ensuring the autonomy and flexibility of the user's operation. After the second determination, the controller automatically controls the manned mower 100 to avoid the obstacle, thereby ensuring the safety and reliability of vehicle operation. The first preset time length and the second preset time length are set according to experiments, simulation calculations, and the conditions of the device to ensure that after the time reaches the second preset time length, the braking control performed by the controller is sufficient to achieve obstacle avoidance.

The first preset time length is 4s to 10s, for example, 4s, 5s, 6s, 7s, 8s, 9s, or 10s; and the second preset time length is 1s to 4s, for example, 1s, 2s, 3s, or 4s. The preceding time lengths may be combined arbitrarily, as long as the first preset time length is greater than the second preset time length. For example, the first preset time length is 5s, and the second preset time length is 2s.

The mowing mechanism 10 includes a mowing blade and a mowing motor for driving the mowing blade to rotate. The controller is communicatively connected to the mowing motor and is configured to control the rotational speed of the mowing motor based on the feedback signal from the sensing device 4000. For example, when steering or slowing down to stop is required due to an obstacle, the mowing motor needs to slow down or pause to avoid mowing in a region outside a preset range or over-mowing at the pause position, and the settings may be performed according to actual requirements.

Referring to FIG. 2, the manned mower 100 further includes a cutting deck height adjustment assembly 70 for adjusting the height of the mowing mechanism 10 relative to the vehicle body 100a, thereby enabling the mowing mechanism 10 to have different cutting heights. An operating member can adjust the cutting height by controlling the cutting deck height adjustment assembly 70. The cutting deck height adjustment assembly 70 is any lifting mechanism in the existing art, and a cutting assembly is connected to the output end of the lifting mechanism. The specific structure and working principle are not described in detail. Alternatively, the controller is configured to control the lifting of the cutting deck height adjustment assembly 70 based on the feedback signal from the sensing device 4000. For example, when steering or slowing down to stop is required due to an obstacle, the cutting deck height adjustment assembly 70 may be controlled to rise to avoid continuing mowing the grass.

The manned mower 100 further includes a speed setting device and an angle sensor. The speed setting device is used for setting the traveling speed of the manned mower 100. The traveling speed set by the speed setting device is defined as the input speed.

The traveling motor drives the manned mower 100 to travel at a target speed, and the ratio of the target speed to the input speed is defined as a conversion ratio. The controller is configured to set the conversion ratio according to the steering angle of the steering operating member 561. The angle sensor is mounted on the steering operating member 561 and is used for detecting the steering angle of the steering operating member 561. During a steering process of the manned mower 100, in the case where the steering angle of the steering operating member 561 is within a preset range, when the steering operating member 561 has a first steering angle, the controller sets the conversion ratio to a first steering conversion ratio; and when the steering operating member 561 has a second steering angle, the controller sets the conversion ratio to a second steering conversion ratio, where the second steering conversion ratio is different from the first steering conversion ratio. In this manner, the controller controls the traveling motor to perform a corresponding deceleration action according to the angle of rotation of the steering operating member 561.

FIG. 8 shows a control method for the manned mower 100. The control method includes the steps below.

In S100, the controller receives the feedback signal from the sensing device 4000.

In S200, whether an obstacle exists in the traveling direction of the manned mower 100 is determined. If so, S300 is performed, otherwise step S100 is performed.

In S300, the controller controls the rotational speed of the traveling motor or changes the direction of the manned mower 100.

When an obstacle is detected, the controller controls deceleration or steering to avoid the obstacle.

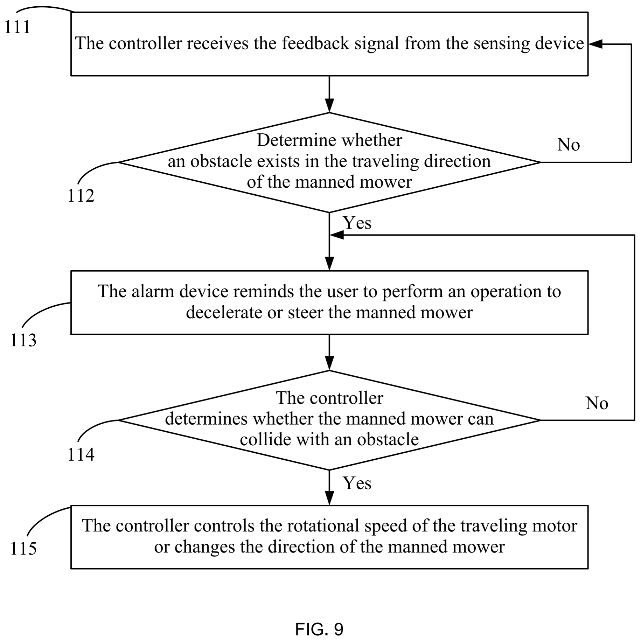

As shown in FIG. 9, when the manned mower 100 is provided with the alert device, the control method for the manned mower 100 includes the steps below.

In S111, the controller receives the feedback signal from the sensing device.

In S112, whether an obstacle exists in the traveling direction of the manned mower is determined. If so, S113 is performed, otherwise step S111 is performed.

In S113, the alert device is activated to remind the user to perform an operation to decelerate or steer the manned mower.

In S114, the controller determines whether the manned mower 100 can collide with an obstacle. If so, step S115 is performed; if not, step S113 is performed.

In S115, the controller controls the rotational speed of the traveling motor or changes the direction of the manned mower 100.

When an obstacle is sensed, the user is prompted to operate the device, and then it is determined whether the device can collide with the obstacle. If so, the controller automatically controls the device to decelerate or steer. If the collision can be avoided through user operation, the controller may no longer automatically control steering or deceleration. By making two judgments to avoid the collision, flexibility and reliability are improved.

In the second example, when the sensing device 4000 can sense the distance from the obstacle, the controller presets the first distance threshold and the second distance threshold, and the control method for the manned mower 100 includes the steps below.

In S121, the controller receives the feedback signal from the sensing device 4000 and determines whether the distance between the manned mower 100 and the obstacle reaches the first distance threshold.

In S122, if so, the user performs an operation to decelerate or steer the manned mower 100.

In S123, whether the distance between the manned mower 100 and the obstacle reaches the second distance threshold is determined.

In S220, if so, the controller controls the rotational speed of the traveling motor or changes the direction of the manned mower 100.

The controller presets the first distance threshold and the second distance threshold and determines the distance from the obstacle twice, thereby ensuring the flexibility and safety of vehicle control.

In the third example, when the sensing device 4000 can sense the distance from the obstacle, the controller presets the first preset time length and the second preset time length, and the control method for the manned mower 100 includes the steps below.

In S131, the controller receives the feedback signal from the sensing device 4000 and determines whether the distance between the manned mower 100 and the obstacle reaches the first preset time length.

In S132, if so, the user performs an operation to decelerate or steer the manned mower 100.

In S133, whether the distance between the manned mower 100 and the obstacle reaches the second preset time length is determined.

In S230, if so, the controller controls the rotational speed of the traveling motor or changes the direction of the manned mower 100.

The controller presets the first preset time length and the second preset time length and determines the time for a collision with the obstacle twice, thereby ensuring the flexibility and safety of vehicle control.

When the manned mower 100 encounters an obstacle while traveling, the following cases may occur.

Firstly, when an obstacle appears and a certain distance exists between the obstacle and the vehicle, that is, before a collision occurs, the obstacle is sensed by the sensing device 4000, and then an operation such as braking or steering is performed to avoid a collision.

Secondly, when a collision with an obstacle occurs, causing the traveling wheels 9311 to be subjected to forces from the left and right sides, the clutch 2000 provided between the traveling wheels 9311 and the steering operating member 561 automatically switches to the decoupling state due to the external forces, thereby preventing the forces from being transmitted to the steering operating member 561 and causing structural damage, user injuries, and loss of steering control of the vehicle.

Thirdly, when a collision with an obstacle occurs, causing the traveling wheels 9311 to be subjected to forces in the front and rear direction, the buffer assemblies 3000 provided between the traveling wheels 9311 and the steering operating member 561 automatically absorb the forces when subjected to the external forces so that the forces transmitted to the steering operating member 561 can be weakened, thereby avoiding structural damage.

By providing the sensing device 4000, the clutch 2000, and the buffer assemblies 3000, a collision between the manned mower 100 and the obstacle can be avoided, or damage after collision can be minimized, thereby protecting the manned mower 100 and the user from multiple perspectives and improving safety and reliability.

The present application further discloses an outdoor work vehicle. The outdoor work vehicle includes a vehicle body on which a support portion for supporting the user is mounted; a traveling mechanism including traveling wheels for supporting the vehicle body and a traveling motor for driving the traveling wheels to rotate; a power supply device including at least one battery pack for supplying power to the traveling motor; a controller for controlling the operation of the traveling motor; a sensing device configured to sense an obstacle in the traveling direction of the outdoor work vehicle; and an alert device triggered by the controller to remind the user or instruct the user to perform relevant operations. The controller is configured to estimate information related to the obstacle based on the output of the sensing device. The alert device is configured to start operating based on the information. The controller is further configured to adjust the traveling speed or direction of the outdoor work vehicle if no user operation is performed within a preset period after the alert device starts operating. The information includes the distance between the outdoor work vehicle and the obstacle or the time it takes for the outdoor work vehicle to collide with the obstacle. The traveling direction includes a forward direction and a reverse direction. The outdoor work vehicle includes at least one of a manned mower, an ATV, or a smart mower. The preceding structures are also applicable to a utility vehicle (UTV). In the related art, the ATV includes a four-wheel ATV, a multi-purpose ATV, and a go-kart.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A manned mower, comprising:
a vehicle body on which a support portion for supporting a user is mounted;
a traveling mechanism comprising traveling wheels for supporting the vehicle body and a traveling motor for driving the traveling wheels to rotate;
a power supply device comprising at least one battery pack for supplying power to the traveling motor;
a controller for controlling operation of the traveling motor; and
a sensing device configured to sense an obstacle in a traveling direction of the manned mower;
wherein the controller is configured to estimate information related to the obstacle based on an output of the sensing device and adjust a traveling speed or the traveling direction of the manned mower when the information satisfies a preset condition.

2. The manned mower of claim 1, further comprising an alert device, wherein the controller is configured to trigger the alert device to activate an alert based on the information related to the obstacle.

3. The manned mower of claim 2, wherein the information comprises a distance between the manned mower and the obstacle.

4. The manned mower of claim 3, wherein the controller is configured to control the alert device to be activated to remind the user or instruct the user to perform relevant operations when the distance is less than or equal to a first distance threshold.

5. The manned mower of claim 4, wherein the controller is configured to control the manned mower to decelerate or change the traveling direction of the manned mower to avoid the obstacle when the distance is less than or equal to a second distance threshold.

6. The manned mower of claim 4, wherein the first distance threshold is greater than or equal to 10 meters and less than or equal to 20 meters.

7. The manned mower of claim 5, wherein the second distance threshold is greater than or equal to 5 meters and less than or equal to 15 meters.

8. The manned mower of claim 2, wherein the controller is further configured to adjust the traveling speed or traveling direction of the manned mower if no user operation is performed within a preset period since the alert device is activated.

9. The manned mower of claim 2, wherein the information comprises time to collision with the obstacle.

10. The manned mower of claim 9, wherein the controller is configured to control the alert device to operate to remind the user or instruct the user to perform relevant operations when time is less than or equal to a first remaining preset time length.

11. The manned mower of claim 10, wherein the controller is configured to control the manned mower to decelerate or change the traveling direction of the manned mower to avoid the obstacle when the time is less than or equal to a second remaining preset time length.

12. The manned mower of claim 11, wherein the first preset time length is greater than or equal to 4s and less than or equal to 10s.

13. The manned mower of claim 11, wherein the second preset time length is greater than or equal to 1s and less than or equal to 4s.

14. The manned mower of claim 1, wherein the traveling direction comprises a forward direction and a reverse direction.

15. The manned mower of claim 1, further comprising a mowing mechanism, wherein the mowing mechanism comprises a mowing blade and a mowing motor for driving the mowing blade to rotate, and the controller is further configured to control a rotational speed of the mowing motor based on the output of the sensing device.

16. An outdoor work vehicle, comprising:
a vehicle body on which a support portion for supporting a user is mounted;
a traveling mechanism comprising traveling wheels for supporting the vehicle body and a traveling motor for driving the traveling wheels to rotate;
a power supply device comprising at least one battery pack for supplying power to the traveling motor;
a controller for controlling operation of the traveling motor;
a sensing device configured to sense an obstacle in a traveling direction of the outdoor work vehicle; and
an alert device triggered by the controller to operate to remind the user or instruct the user to perform relevant operations;
wherein the controller is configured to estimate information related to the obstacle based on an output of the sensing device;
the alert device is configured to start operating based on the information; and
the controller is further configured to adjust a traveling speed or the traveling direction of the outdoor work vehicle if no user operation is performed within a preset period after the alert device starts operating.

17. The outdoor work vehicle of claim 16, wherein the information comprises a distance between the outdoor work vehicle and the obstacle or time to collision with the obstacle.

18. The outdoor work vehicle of claim 16, wherein the traveling direction comprises a forward direction and a reverse direction.

19. The outdoor work vehicle of claim 16, comprising at least one of a manned mower, an all-terrain vehicle (ATV), or a smart mower.
